# EUROPEAN PATENT SPECIFICATION

(11) **EP 1 029 250 B1**
(45) Date of publication and mention of the grant of the patent: **12.03.2003**
(21) Application number: 98963446.4
(22) Date of filing: 12.11.1998
(51) Int. Cl.: G02B 1/04, G02C 7/04

(54) **METHODS AND COMPOSITIONS FOR MANUFACTURING TINTED OPHTHALMIC LENSES**
VERFAHREN UND ZUSAMMENSETZUNG ZUR HERSTELLUNG VON GEFÄRBTEN OPHTHALMISCHEN LINSEN
PROCEDES ET COMPOSITIONS POUR LA FABRICATION DE LENTILLES OPHTALMIQUES TEINTEES

(30) Priority: 14.11.1997 US 970706
(43) Date of publication of application: 23.08.2000
(73) Proprietor: Novartis AG, 4056 Basel (CH); Novartis Pharma GmbH, 1230 Wien (AT)
(72) Inventor: LALLY, John, Martin, Lilburn, GA 30247 (US); STOCKINGER, Friedrich, CH-1784 Courtepin (CH); COOPER, Charlotte, Lynn, Chamblee, GA 30341 (US); MÜLLER, Achim, D-63762 Grossostheim (DE); MULCAHY, Deborah, Jean, Duluth, GA 30136 (US); SEIFERLING, Bernhard, D-63773 Goldbach (DE)
(74) Representative: Becker, Konrad
(86) International application number: EP9807243
(87) International publication number: WO99026087

(56) References cited:
- EP-A- 0 093 944
- EP-A- 0 343 796
- EP-A- 0 382 005
- EP-A- 0 384 632
- WO-A-97/17181
- WO-A-98/05690
- WO-A-99/02574
- US-A- 5 508 317
- DATABASE WPI Section Ch, Week 9445 Derwent Publications Ltd., London, GB; Class A23, AN 94-363157 XP002100203 & JP 06 286009 A (IINO KOKI SEISAKUSHO KK) , 11 October 1994

## Description

This invention relates broadly to incorporating radiation-absorbing additives into polymeric articles. In a preferred embodiment, this invention relates to compositions and methods of manufacturing visibility ("full body") tinted contact lenses comprising pigments that are strongly resistant to inactivation during photopolymerization or photocrosslinking.

A number of dyes have been incorporated into ophthalmic lenses, such as contact lenses, for a variety of reasons. Two popular types of dyes include ultraviolet (UV) light-absorbing agents and visible light absorbing agents. One common reason for incorporating dyes into contact lenses is to produce a lens which changes the apparent or perceived color of the wearer's iris. Another reason for dying a contact lens is to enable the consumer to easily locate the lens in a clear solution within a lens storage, disinfecting or cleaning container. Dyeing a lens for this purpose is termed "visibility tinting" the lens.

Visibility tinting may be accomplished by applying a dye to a portion of the surface, or by applying the dye to the full front surface of the lens. Alternatively, the tint may be incorporated into the full body of the polymer matrix of the lens. There have been a number of patents and published patent applications relating to tinting contact lenses or manufacturing contact lenses which change the wearer's iris color. However, the known processes are not yet totally satisfactory, for example, with respect to the production efficiency and/or the quality of the products obtained.

Therefore, there is still a need for a method of making a visibility tinted, i.e., full-body tinted, contact lens with an improved efficiency by for example minimizing in-line production steps. In addition, there is a demand for tinted ophthalmic lenses with improved properties, for example, with respect to bleach-resistance, mechanical strength and leaching or migration of the dye out of the lens.

These and other objects and advantages are achieved by the present invention.

The present invention therefore in one embodiment relates to a process for the manufacture of a radiation-absorbing ophthalmic molding comprising the steps of:
(a) providing a water soluble polymer precursor having crosslinkable or polymerizable groups which is a crosslinkable polyvinyl alcohol having a weight average molecular weight of at least 2000;
(b) providing an aqueous pigment dispersion comprising a phthalocyanine pigment and a physiologically acceptable, water soluble, polymeric dispersing agent selected from the group consisting of a polymer precursor according to (a), a polyacrylic acid and a non-crosslinkable polyvinyl alcohol;
(c) mixing the pigment dispersion with the polymer precursor to form a tinted prepolymerization mixture;
(d) dispensing the tinted prepolymerization mixture into a mold;
(e) applying radiation to the tinted prepolymerization mixture in the mold, thereby crosslinking or polymerizing the polymer precursor and entrapping the pigment within the polymeric network of the resultant ophthalmic molding; and
(f) opening the mold so that the ophthalmic molding can be removed from the mold.

The polyvinyl alcohol according to step (a) is a "polymer precursor" or "prepolymer", and refers to a crosslinkable or polymerizable material. Preferably, the polyvinyl alcohol is vinyl functional, i.e., the polymer precursor includes one or more carbon-carbon double bonds.

### (i) POLYMER PRECURSOR

The polymer precursor is a prepolymer having a weight average molecular weight of at least 2000. The prepolymer has more preferably a weight average molecular weight of 10,000 to 300,000 and even more preferably from 10,000 to 200,000. Most preferred, the prepolymer has a weight average molecular weight of 50,000 to 100,000.

In accordance with the invention, the polymer precursor is soluble in water. The criterion that the polymer is soluble in water denotes in particular that the polymer precursor is soluble in a concentration of from 3 to 90% by weight, preferably from 5 to 60% by weight, especially from 10 to 60% by weight, in a substantially aqueous solution. Insofar as it is possible in an individual case, polymer precursor concentrations of more than 90% are also included in accordance with the invention.

The prepolymer used in accordance with the invention includes polymerizable or crosslinkable groups, preferably crosslinkable groups. "Crosslinkable groups" denotes customary crosslinkable groups well-known to the person skilled in the art, such as, for example, photocrosslinkable or thermally crosslinkable groups. Crosslinkable groups such as those already proposed for the preparation of contact lens materials are especially suitable. Those include especially, but not exclusively, groups comprising carbon-carbon double bonds. To demonstrate the large variety of suitable crosslinkable groups, there are mentioned here, merely by way of example, the following crosslinking mechanisms: radical polymerisation, 2+2 cyclo-addition, Diels-Alder reaction, ROMP (Ring Opening Metathesis Polymerisation), vulcanisation, cationic crosslinking and epoxy hardening.

The prepolymer used in accordance with the invention preferably comprises crosslinkable groups in an amount of from 0.5 to 80% equivalents, based on the equivalents of monomers that form the polymeric backbone, especially from 1 to 50%, preferably from 1 to 25%, preferably from 2 to 15% and especially preferably from 3 to 10%. Also especially preferred are amounts of crosslinkable groups of from 0.5 to 25% equivalents, especially from 1 to 15% and especially preferably from 2 to 12%, based on the equivalents of monomers that form the polymeric backbone.

One preferred criterion for the suitability of a prepolymer for the process according to the invention is that it is a crosslinkable prepolymer, but the prepolymer is uncrosslinked, or at least substantially uncrosslinked.

In addition, the prepolymer is advantageously stable in the uncrosslinked state, so that it can be subjected to purification. The prepolymers are preferably used in form of a pure solution in the process according to the invention. The prepolymers can be converted into the form of a pure solution by conventional methods, for example in the manner disclosed hereinafter.

A particularly preferred class of polymeric materials are polyvinyl alcohols, especially those disclosed in U.S. Patent No. 5,508,317, issued to inventor Beat Muller and originally assigned to Ciba-Geigy Corporation. The disclosure of U.S. Patent No. 5,508,317 is hereby incorporated by reference. The preferred group of prepolymers of polyvinyl alcohols includes derivatives of polyvinyl alcohol having a weight-average molecular weight of at least 2000 that, based on the number of hydroxy groups of the polyvinyl alcohol, include from 0.5% to 80% of units of formula I: 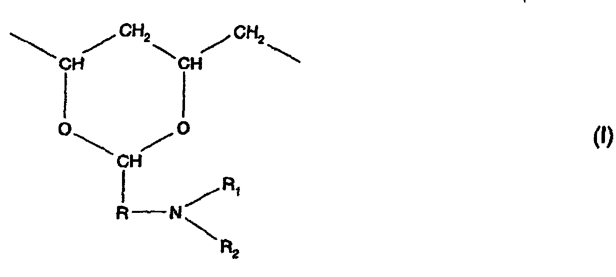 wherein R is alkylene having up to 8 carbon atoms, R₁ is hydrogen or lower alkyl, and R₂ is an olefinically unsaturated, electron-attracting copolymerizable radical, preferably having up to 25 carbon atoms, preferably an olefinically unsaturated acyl radical of the formula R₃-CO-, in which R₃ is an olefinically unsatured copolymerisable radical having from 2 to 24 carbon atoms, preferably from 2 to 8 carbon atoms, especially preferably from 2 to 4 carbon atoms.

It should be noted that molecular weights, as used herein, are weight average molecular weights, Mw, unless otherwise specified.

In another embodiment, the radical R₁ is a radical of the formula II:

-CO-NH-(R₄-NH-CO-O)_{q}-R₅-O-CO-R₃ (II)

where q is zero or one, R₄ and R₅ are each independently alkylene having from 2 to 8 carbon atoms, arylene having from 6 to 12 carbon atoms, a saturated divalent cycloaliphatic group having from 6 to 10 carbon atoms, arylenealkyene or alkylenearylene having from 7 to 14 carbon atoms or arylenealkyenearlyene having from 13 to 16 carbon atoms, and R₃ is as defined above.

A more preferred prepolymer useful in accordance with the present invention is a derivative of a polyvinyl alcohol having a weight average molecular weight of at least 2000 that, based on the number of hydroxyl groups of the polyvinyl alcohol, includes from 0.5% to 80% of units of formula III: 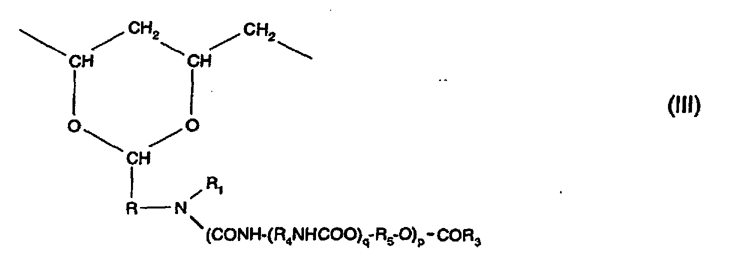 where R is alkylene having up to 8 carbon atoms, R₁ is hydrogen or lower alkyl, p is zero or one, q is zero or one, R₃ is an olefinically unsaturated copolymerisable radical having from 2 to 8 carbon atoms, and R₄ and R₅ are each, independently of the other, lower alkylene having from 2 to 8 carbon atoms, arylene having from 6 to 12 carbon atoms, a saturated divalent cycloaliphatic group having from 7 to 14 carbon atoms or arylenealkylenearylene having from 13 to 16 carbon atoms.

Lower alkylene R has up to 8 carbon atoms and may be straight-chained or branched. Suitable examples include octylene, hexylene, pentylene, butylene, propylene, ethylene, methylene, 2-propylene, 2-butylene and 3-pentylene. Preferably lower alkylene R has up to 6 and especially preferably up to 4 carbon atoms. The meanings methylene and butylene are especially preferred.

R₁ is preferably hydrogen or lower alkyl having up to seven, especially up to four, carbon atoms, especially hydrogen.

Lower alkylene R₄ or R₅ preferably has from 2 to 6 carbon atoms and is especially straight-chained. Suitable examples include propylene, butylene, hexylene, dimethylethylene and, especially preferably, ethylene.

Arylene R₄ or R₅ is preferably phenylene that is unsubstituted or is substituted by lower alkyl or lower alkoxy, especially 1,3-phenylene or 1,4-phenylene or methyl-1,4-phenylene.

A saturated divalent cycloaliphatic group R₄ or R₅ is preferably cyclohexylene or cyclohexylene-lower alkylene, for example cyclohexylenemethylene, that is unsubstituted or is substituted by one or more methyl groups, such as, for example, trimethylcyclohexylenemethylene, for example the divalent isophorone radical.

The arylene unit of alkylenearylene or arylenealkylene R₄ or R₅ is preferably phenylene, unsubstituted or substituted by lower alkyl or lower alkoxy, and the alkylene unit thereof is preferably lower alkylene, such as methylene or ethylene, especially methylene. Such radicals R₄ or R₅ are therefore preferably phenylenemethylene or methylenephenylene.

Arylenealkylenearylene R₄ or R₅ is preferably phenylene-lower alkylene-phenylene having up to 4 carbon atoms in the alkylene unit, for example phenyleneethylenephenylene.

The radicals R₄ and R₅ are each, independently of the other, preferably alkylene having from 2 to 6 carbon atoms, phenylene, unsubstituted or substituted by lower alkyl, cyclohexylene or cyclohexylene-lower alkylene, unsubstituted or substituted by lower alkyl, phenylene-lower alkylene, lower alkylene-phenylene or phenylene-lower alkylene-phenylene.

As used herein, the term "lower", as used in connection with radicals and compounds, denotes radicals or compounds having up to 7 carbon atoms, preferably up to 4 carbon atoms, unless defined otherwise. Lower alkyl has especially up to 7 carbon atoms, preferably up to 4 carbon atoms, and is, for example, methyl, ethyl, propyl, butyl or tert-butyl. Similarly, lower alkoxy has especially up to 7 carbon atoms, preferably up to 4 carbon atoms, and is, for example, methoxy, ethoxy, propoxy, butoxy or tert-butoxy.

The olefinically unsaturated copolymerisable radical R₃ is preferably alkenyl having from 2 to 24 carbon atoms, especially alkenyl having from 2 to 8 carbon atoms and especially preferably alkenyl having from 2 to 4 carbon atoms, for example ethenyl, 2-propenyl, 3-propenyl, 2-butenyl, hexenyl, octenyl or dodecenyl. R₃ is preferably ethenyl and 2-propenyl, so that the group -CO-R₃ is the acyl radical of acrylic or methacrylic acid.

The divalent group ―R₄―NH―CO―O― is present when q is one and absent when q is zero. Prepolymers in which q is zero are preferred.
The divalent group ―CO―NH―(R₄―NH―CO―O)_{q}―R₅―O― is present when p is one and absent when p is zero. Prepolymers in which p is zero are preferred.

in prepolymers in which, p is one the index q is preferably zero. Prepolymers in which p is one, the index q is zero and R₅ is lower alkylene are especially preferred.

A preferred prepolymer according to the invention is therefore especially a derivative of a polyvinyl alcohol having a molecular weight of at least 2000 that, based on the number of hydroxy groups of the polyvinyl alcohol, comprises from 0.5 to 80% of units of formula III in which R is lower alkylene having up to 6 carbon atoms, p is zero and R₃ is alkenyl having from 2 to 8 carbon atoms.

A further preferred prepolymer according to the invention is a derivative of a polyvinyl alcohol having a molecular weight of at least 2000 that, based on the number of hydroxy groups of the polyvinyl alcohol, comprises from 0.5 to 80% of units of formula III in which R is alkylene having up to 6 carbon atoms, p is one, q is zero, R₅ is alkylene having from 2 to 6 carbon atoms and R₃ is alkenyl having from 2 to 8 carbon atoms.

Yet a further preferred prepolymer according to the invention is a derivative of a polyvinyl alcohol having a molecular weight of at least 2000 that, based on the number of hydroxy groups of the polyvinyl alcohol, comprises from 0.5 to 80% of units of formula III in which R is alkylene having up to 6 carbon atoms, p is one, q is one, R₄ is alkylene having from 2 to 6 carbon atoms, phenylene, unsubstituted or substituted by lower alkyl, cyclohexylene or cyclohexylene-lower alkylene, unsubstituted or substituted by lower alkyl, phenylene-lower alkylene, lower alkylene-phenylene or phenylene-lower alkylene-phenylene, R₅ is alkylene having from 2 to 6 carbon atoms and R₃ is alkenyl having from 2 to 8 carbon atoms.

The prepolymers according to the invention are preferably derivatives of polyvinyl alcohol having a molecular weight of at least 2000 that, based on the number of hydroxy groups of the polyvinyl alcohol, comprises from 0.5 to 80%, especially from 1 to 50%, preferably from 1 to 25%, preferably from 2 to 15% and especially preferably from 3 to 10%, of units of formula III. Prepolymers according to the invention which are provided for the manufacture of contact lenses comprise, based on the number of hydroxy groups of the polyvinyl alcohol, especially from 0.5 to 25%, especially from 1 to 15% and especially preferably from 2 to 12%, of units of formula III.

Polyvinyl alcohols that can be derivatized in accordance with the invention preferably have a weight average molecular weight of at least 10,000. As an upper limit the polyvinyl alcohols may have a molecular weight of up to 1,000,000. Preferably, the polyvinyl alcohols have a molecular weight of up to 300,000, especially up to 100,000 and especially preferably up to 50,000.

Polyvinyl alcohols suitable in accordance with the invention usually have a poly(2-hydroxy)ethylene structure. The polyvinyl alcohols derivatised in accordance with the invention may, however, also comprise hydroxy groups in the form of 1,2-glycols, such as copolymer units of 1,2-dihydroxyethylene, as may be obtained, for example, by the alkaline hydrolysis of vinyl acetate/vinylene carbonate copolymers.

In addition, the polyvinyl alcohols derivatized in accordance with the invention may also comprise small proportions, for example up to 20%, preferably up to 5%, of copolymer units of ethylene, propylene, acrylamide, methacrylamide, dimethacrylamide, hydroxyethyl methacrylate, methyl methacrylate, methyl acrylate, ethyl acrylate, vinylpyrrolidone, hydroxyethyl acrylate, allyl alcohol, styrene or similar customarily used comonomers.

Commercially available polyvinyl alcohols may be used, such as, for example, Vinol® 107 produced by Air Products (MW=22,000 to 31,000, 98-98.8% hydrolysed), Polysciences 4397 (MW=25,000, 98.5% hydrolysed), BF 14 produced by Chan Chun, Elvanol® 90-50 produced by DuPont, UF-120 produced by Unitika, Mowiol® 3-83, 4-88, 10-98 and 20-98 produced by Hoechst. Other manufacturers are, for example, Nippon Gohsei (Gohsenol®), Monsanto (Gelvatol®), Wacker (Polyviol®) and the Japanese manufacturers Kuraray, Denki and Shin-Etsu. The molecular weights referenced herein are weight average weights, Mw, determined by gel permeation chromatography, unless otherwise specified.

As already mentioned, it is also possible to use copolymers of hydrolysed vinyl acetate, which are obtainable, for example, in the form of hydrolysed ethylene/vinyl acetate (EVA), or vinyl chloride/vinyl acetate, N-vinylpyrrolidone/vinyl acetate and maleic acid anhydride/vinyl acetate.

Polyvinyl alcohol is usually prepared by hydrolysis of the corresponding homopolymeric polyvinyl acetate. In a preferred embodiment, the polyvinyl alcohol derivatised in accordance with the invention comprises less than 50% of polyvinyl acetate units, especially less than 20% of polyvinyl acetate units. Preferred amounts of residual acetate units in the polyvinyl alcohol derivatised in accordance with the invention, based on the sum of vinyl alcohol units and acetate units, are from 3 to 20%, preferably from 5 to 16% and especially from 10 to 14%.

In a preferred embodiment, the polymer precursor comprising units of the formula I or III has a weight average molecular weight of at least 2000. More preferably, the polymer precursor has a weight average molecular weight of from 10,000 to 300,000. A more preferred weight average molecular weight of the polymer precursor mixtures is 10,000 to 200,000. Even more preferred is a weight average molecular weight of 50,000 to 100,000.

The prepolymers comprising units of formula I or III may be prepared in a manner known per se. A suitable process for the manufacture of said prepolymers is disclosed for example in U.S. Patent No. 5,508,317.

The prepolymers comprising units of formula I or III can furthermore be purified via a variety of processes which are likewise disclosed for example in U.S. Patent No. 5,508,317.

According to step (a) of the inventive process, those polymer precursors which are liquid or readily meltable may be provided substantially free of solvents. However, the polymer precursor preferably is in solution with a solvent.

Suitable solvents for the polymer precursor include water, alcohols, such as lower alkanols, for example ethanol or methanol, also carboxylic acid amides, such as dimethylformamide, or dimethyl sulfoxide, and also a mixture of suitable solvents, such as, for example, a mixture of water with an alcohol, such as, for example, a water/ethanol or a water/methanol mixture.

Preferably, the polymer prercursor according to step (a) is provided in form of an aqueous solution and more preferably in form of a pure aqueous solution or a solution of an artificial lacrimal fluid.

Especially preferred concentrations of the polymer precursor in solution are from 15 to 50% by weight, especially from 15 to 40% by weight, and in particular from 20% to 40% by weight, based in each case on the entire solution.

The aqueous solution of the polymer precursor may be a salt solution, especially a solution that has an osmolarity of from 200 to 450 milliosmol per 1000 ml (unit: mOsm/l), preferably an osmolarity of from 250 to 350 mOsm/l, especially 300 mOsm/l, or in mixtures of water or aqueous salt solutions with physiologically tolerable polar organic solvents, such as, for example, glycerol.

The aqueous salt solutions are advantageously solutions of physiologically tolerable salts, such as buffer salts customary in the field of contact lens care, for example phosphate salts, or isotonising agents customary in the field of contact lens care, such as, especially, alkali halides, for example sodium chloride, or solutions of mixtures thereof. An example of an especially suitable salt solution is an artificial, preferably buffered, lacrimal fluid that in respect of pH value and osmolarity is adapted to natural lacrimal fluid, for example a sodium chloride solution that is unbuffered or that is preferably buffered, for example, by phosphate buffer, and that has an osmolarity that corresponds to the osmolarity of human lacrimal fluid.

The substantially aqueous solution of the polymer precursor defined above is preferably a pure solution, which means a solution which is free or essentially free from undesired constituents. The viscosity of the solution of the prepolymer in the substantially aqueous solution should be sufficiently low to allow reasonable processability. Thus, the polymer precursor solution viscosity should be sufficiently low to allow dispensing through the chosen dispensing tip into the female mold half at a reasonably fast rate in order to minimize cycle time and in order to minimize product defects (e.g., defects associated with bubble formation).

The polymer precursor or the solution of the polymer precursor according to step (a) is preferably one that comprises no, or substantially no, undesired constituents that would have to be extracted after a crosslinking operation. Undesirable constituents include monomeric, oligomeric or polymeric starting compounds used for the preparation of the prepolymer. Thus, the concentration of undesirable constituents after crosslinking is an amount which is less than that which would cause ocular irritation or damage after normal use in the ocular environment. A particular feature of this preferred embodiment of the process according to the invention is that extraction of undesired constituents following crosslinking is not necessary.

### (ii) INORGANIC OR ORGANIC PIGMENT

The class of radiation-absorbing additives useful in accordance with the present invention are inorganic or organic pigments or derivatives thereof. The use of organic pigments, specifically phthalocyanine pigments, more specifically copper phthalocyanine pigments and most specificallly blue copper phthalocyanine pigments, for example Color Index Pigment Blue 15, Constitution No. 74160, is preferred.

The amount of pigment necessary in a particular application may vary within wide limits dependant, in part, upon the desired final product dimensions and desired visible and/or ultraviolet light transmission. For example, the amount of pigment is chosen so that the optical transmission of the final lens is for example ≥ 80 %, preferably ≥ 90 %, more preferably from 92 to 99.5 % and particularly preferably from 95 to 99 %. The above given transmission values refer to a 100 µm center thickness of the lens and to the wavelength of the absorption maximum of the respective pigment. The amount of pigment necessary to achieve the desired optical transmission is advantageously chosen so that the weight percentage of pigment, based on the total weight of polymer precursor, and optional comonomers present in the prepolymerization mixture according to c), is from 0.0001 to 0.05 %. Preferably, said weight percentage of pigment is from 0.0001 to 0.02 %. More preferably, said weight percentage of pigment is from 0.0001 to 0.01 %.

The particle size of the pigment may vary within wide limits. In general, the particle size should be small enough to avoid light scattering which is clinically significant for the degree of tint intensity required. An average particle size of ≤ 1 µm, advantageously ≤ 0.6 µm, preferably from 0.05 to 0.6 µm and particularly preferred from 0.05 to 0.5 µm has proven as advantageous.

In general, the pigment is provided in form of an aqueous dispersion which comprises the pigment and at least one suitable dispersing agent. Common dispersing agents suitable for this purpose are known to the man skilled in the art of dyes and pigments. In addition, it has surprisingly been found that the water soluble polymer precursor according to (a) or any water soluble polymer which is physiologically acceptable may be used as a surfactant in aiding dispersion of the hydrophobic pigment particles. Accordingly, it is preferred to use an inventive polymer precursor or a water soluble physiologically acceptable polymer as dispersing agent and omit a further additive. Examples of water soluble physiologically acceptable polymers in addition to the polymer precursor according to (a) that may be used as surfactant are a polyacrylic acid or a polyvinyl alcohol which is devoid of a crosslinkable or polymerizable group, for example a polyvinyl alcohol mentioned before as starting material for the polymer precursor according to (a).

The pigment contents of the aqueous pigment dispersion employed according to step (b) may vary within wide limits. In general, a pigment contents from 1 to 70 % by weight, preferably 5 to 60 % by weight and more preferably 5 to 50 % by weight, in each case relative to the weight of the entire dispersion, has proven as valuable. When a water soluble physiologically acceptable polymer, particularly a non-polymerizable polyvinyl alcohol or a prepolymer according to (a), is used as dispersing agent for the pigment, said polymer is advantageously present in an amount of 1 to 60 % by weight, preferably 5 to 40 % by weight, more preferably 10 to 40 % by weight and most preferably 10 to 30 % by weight, in each case based the weight of the entire pigment dispersion. The initial pigment dispersion may be further diluted by adding, for example, water or an aqueous solution of the polymer precursor according to (a), before preparing the prepolymerization mixture according to (c).

In a preferred embodiment of step (b) of the process, a phthalocyanine pigment is provided in form of an aqueous dispersion comprising the pigment and one or more water soluble polymeric dispersing agents selected from the group consisting of a polymer precursor according to (a), a polyacrylic acid and a non-crossiinkable polyvinyl alcohol. More preferably, the phthalocyanine pigment is provided in form of an aqueous dispersion comprising the pigment and one or more water soluble polymeric dispersing agents selected from the group consisting of a non-crosslinkable polyvinyl alcohol and a polymer precursor according to (a) which may be different or, preferably, identical to that employed in step (a).

When a water soluble physiologically acceptable polymer, for example a non-crosslinkable polyvinyl alcohol or a prepolymer according to (a), is used as dispersing agent for the pigment in step (b), said polymer is preferably purified in advance as described above for the polymer precursor. Accordingly, the dispersion of the pigment according to step (b) comprises no, or substantially no, undesired constituents mentioned before that would have to be extracted after the crosslinking operation.

The aqueous pigment dispersion according to step (b) is prepared for example by simply admixing water, the pigment and the dispersing agent in a suitable device, for example in a high speed blender, in a roll or ball mill or by use of an ultrasonic probe. In some cases it may me appropriate to filter the pigment dispersion according to step (b) or the prepolymerization mixture according to step (c) prior to further processing it in order to exclude pigment particles having a particle size that exceeds the afore-mentioned limits.

### (iii). PHOTOINITIATORS

In the case of photocrosslinking, it is appropriate to add a crosslinking initiator (preferably a photoinitiator for photocrosslinking) which can initiate crosslinking. The photoinitiator is added for example to the polymer precursor according to step (a) or preferably to the prepolymerization mixture according to step (c). A reasonable amount of mixing is preferred to distribute the photoinitiator substantially uniformly throughout the polymer precursor solution. Photoinitiators are known to the person having ordinary skill in the art, and include, without limitation thereto, benzoin methyl ether, 1-hydroxycyclohexylphenyl ketone, and DAROCUR® or IRGACUR types, e.g. DAROCUR® 1173 or IRGACUR® 2959, available from Ciba-Geigy Corporation (Ardsley, New York). The amount of photoinitiator can be

chosen within wide limits, an amount of up to 0.05 g/g of polymer and especially of up to 0.003 g/g of polymer having proved advantageous. The crosslinking can then be triggered by actinic radiation, such as, for example, UV light, or ionising radiation, such as, for example, gamma radiation or X-radiation.

### (iv) COMONOMERS

It is preferable to carry out the crosslinking process according to the invention without the addition of a comonomer, for example a vinylic comonomer. However, a vinylic comonomer may be used in addition in the photocrosslinking, and the comonomer may be hydrophilic or hydrophobic or a mixture of a hydrophobic and a hydrophilic vinylic monomer. Suitable vinylic monomers include especially those customarily used in the manufacture of contact lenses. A hydrophilic vinylic monomer denotes a monomer that typically yields as homopolymer a polymer that is water-soluble or can absorb at least 10% by weight of water. Analogously, a hydrophobic vinylic monomer denote, a monomer that typically yields as homopolymer a polymer that is water-insoluble and can absorb less than 10% by weight of water.

Generally, from 0.01 to 80 units of a typical vinylic comonomer react per unit of formula I or III. If a vinylic comonomer is used, the crosslinked polymers according to the invention preferably comprise from 1 to 15%, especially preferably from 3 to 8%, of units of formula I or III, based on the number of hydroxy groups of the polyvinyl alcohol, which are reacted with from 0.1 to 80 units of the vinylic monomer.

The proportion of the vinylic comonomers, if used, is preferably from 0.5 to 80 units per unit of formula I, especially from 1 to 30 units per unit of formula I, and especially preferably from 5 to 20 units per unit of formula I.

It is also preferable to use a hydrophobic vinylic comonomer or a mixture of a hydrophobic vinylic comonomer with a hydrophilic vinylic comonomer, the mixture comprising at least 50% by weight of a hydrophobic vinylic comonomer. In that manner the mechanical properties of the polymer can be improved without the water content falling substantially. In principle, however, both conventional hydrophobic vinylic comonomers and conventional hydrophilic vinylic comonomers are suitable for the copolymerisation with polyvinyl alcohol comprising groups of formula I.

Suitable hydrophobic vinylic comonomers include, without the list being exhaustive, C₁-C₁₈ alkyl acrylates and methacrylates, C₃-C₁₈ alkyl acrylamides and methacrylamides, acrylonitrile, methacrylonitrile, vinyl-C₁-C₁₈ alkanoates, C₂-C₁₈ alkenes, C₂-C₁₈ haloalkenes, styrene, C₁-C₆ alkylstyrene, vinyl alkyl ethers, in which the alkyl moiety contains from 1 to 6 carbon atoms, C₂-C₁₀ perfluoroalkyl acrylates and methacrylates or correspondingly partially fluorinated acrylates and methacrylates, C₃-C₁₂ perfluoroalkyl-ethylthiocarbonylaminoethyl acrylates and methacrylates, acryloxy- and methacryloxy-alkylsiloxanes, N-vinylcarbazole, C₁-C₁₂ alkyl esters of maleic acid, fumaric acid, itaconic acid, mesaconic acid and the like. C₁-C₄ alkyl esters of vinylically unsaturated carboxylic acids having from 3 to 5 carbon atoms or vinyl esters of carboxylic acids having up to 5 carbon atoms, for example, are preferred.

Examples of suitable hydrophobic vinylic comonomers include methyl acrylate, ethyl acrylate, propyl acrylate, isopropyl acrylate, cyclohexyl acrylate, 2-ethylhexyl acrylate, methyl methacrylate, ethyl methacrylate, propyl methacrylate, vinyl acetate, vinyl propionate, vinyl butyrate, vinyl valerate, styrene, chloroprene, vinyl chloride, vinylidene chloride, acrylonitrile, 1-butene, butadiene, methacrylonitrile, vinyltoluene, vinyl ethyl ether, perfluorohexylethylthiocarbonylaminoethyl methacrylate, isobornyl methacrylate, trifluoroethyl methacrylate, hexafluoroisopropyl methacrylate, hexafluorobutyl methacrylate, tris-trimethylsilyloxy-silyl-propyl methacrylate, 3-methacryloxypropylpentamethyldisiloxane and bis(methacryloxypropyl)tetramethyldisiloxane. Preferred hydrophobic vinylic comonomers are methyl methacrylate and vinyl acetate.

Suitable hydrophilic vinylic comonomers include, without the limitation thereto, hydroxy-substituted lower alkyl acrylates and methacrylates, acrylamide, methacrylamide, lower alkyl acrylamides and methacrylamides, ethoxylated acrylates and methacrylates, hydroxy-substituted lower alkyl acrylamides and methacrylamides, hydroxy-substituted lower alkyl vinyl ethers, sodium ethylenesulfonate, sodium styrenesulfonate, 2-acrylamido-2-methylpropanesulfonic acid, N-vinylpyrrole, N-vinylsuccinimide, N-vinylpyrrolidone, 2- or 4-vinylpyridine, acrylic acid, methacrylic acid, amino- (the term "amino" also including quaternary ammonium), mono-lower alkylamino- or di-lower alkylamino-lower alkyl acrylates and methacrylates, allyl alcohol and the like. Hydroxy-substituted C₂-C₄alkyl(meth)acrylates, five- to seven-membered N-vinyl lactams, N,N-di-C₁-C₄alkyl(meth)acrylamides and vinylically unsaturated carboxylic acids having a total of from 3 to 5 carbon atoms, for example, are preferred.

Examples of suitable hydrophilic vinylic comonomers include hydroxyethyl methacrylate, hydroxyethyl acrylate, acrylamide, methacrylamide, dimethylacrylamide, allyl alcohol, vinylpyridine, vinylpyrrolidone, glycerol methacrylate, N-(1,1-dimethyl-3-oxobutyl)acrylamide, and the like. Preferred hydrophilic vinylic comonomers are 2-hydroxyethyl methacrylate, N-vinylpyrrolidone and acrylamide.

### (v). PREPARATION OF A TINTED PREPOLYMERIZATION MIXTURE AND MANUFACTURE OF A TINTED OPHTHALMIC LENS THEREFROM

According to step (c) of the inventive process, a tinted prepolymerization mixture may be formed by admixing suitable amounts mentioned before of a polymer precursor according to (a), a pigment dispersion according to (b) and optionally a photoinitiator and/or one or more comonomers.

In the preferred process of the invention the prepolymerization mixture comprises a photoinitiator but is devoid of an additional vinyl comonomer.

The tinted prepolymerization mixture thus obtained can be processed in a manner known *per se* to form moldings, especially contact lenses, for example by carrying out the photocrosslinking of the prepolymerization mixture in a suitable contact lens mold.

For the introduction of the tinted prepolymerization mixture of the invention into a mold, processes known *per se* can be used, such as, especially, conventional metering in, for example by means of dropwise introduction. The liquid mixture, which is dispensed into the mold is preferably an aqueous solution. For example, a 15 to 50 weight percent, preferably 15 to 40 weight percent and more preferably 20 to 40 % weight percent, aqueous solution can be photocrosslinked. If vinyl comonomers are present, the above-mentioned comonomers in the amounts mentioned there are suitable. vinyl comonomers that may be present are advantageously first mixed with the polymer precursor of the invention and then introduced into the mold.

Appropriate molds or mold halves may be manufactured from disposable or recyclable polymeric materials (e.g., polypropylene or polystyrene) which transmit radiation of the chosen wavelength sufficient to crosslink or polymerize the polymer precursor.
Alternatively, re-usable molds may be manufactured from materials such as quartz, sapphire or metals.
When the moldings to be produced are contact lenses, they can be produced in a manner known *per se*, for example in a conventional "spin-casting mold", as described, for example, in U.S. Pat. No. 3,408,429. However, double-sided molding (DSM) processes, such as described in U.S. Pat. No. 4,347,198, which is incorporated by reference, are preferred. Double-sided molding processes typically utilize a concave (also known as 'female" or "front surface") mold half which mates with a convex (also known as "male" or 'back surface") mold half. Typically, in the DSM process, liquid monomer or polymer precursor is dispensed into the female mold half, the male mold half is affixed to the female mold half, and light (e.g. ultraviolet) is applied to initiate polymerization or crosslinking and form a solid lens.

The photocrosslinking can be induced in the mold, for example by actinic radiation, e.g. UV light, or ionising radiation, e.g. gamma radiation or X-rays.

It is to be emphasised that according to the invention the crosslinking can be effected in a very short time, for example in ≤ 60 minutes, advantageously in ≤ 20 minutes, preferably in ≤ 10 minutes, especially in ≤ 5 minutes, more especially In ≤ 1 minute and most especially in ≤ 30 seconds.

Opening of the mold so that the molding can be removed from the mold can be carried out in a manner known *per se*.

Particular preferred embodiments of the process of the invention are shown in the examples and claims.

A further embodiment of the invention relates to tinted ophthalmic moldings, particularly tinted contact lenses that are obtainable according to the process of the invention, wherein the above given definitions and preferences apply.

When the molding produced according to the invention is a contact lens and when the latter has been produced from a prepolymerization mixture comprising previously purified components, then the crosslinked product does not contain any troublesome impurities either. Subsequent extraction is therefore unnecessary. Since the crosslinking is carried out in a substantially aqueous solution, subsequent hydration is also unnecessary. The contact lenses obtainable according to that process are therefore distinguished, according to an advantageous embodiment, by the fact that they are suitable for their designated use without extraction. In this connection, designated use is understood as meaning especially that the contact lenses can be inserted into the human eye.

The contact lenses obtainable according to the invention have a range of unusual and extremely advantageous properties. Of those properties there may be mentioned, for example, their excellent tolerability by the human cornea, which is based on a balance of water content, oxygen permeability and mechanical properties. Moreover, the contact lenses of the invention have a high mechanical strength and particularly exhibit a high degree of dimensional stability. No changes in shape were discernible even after autoclaving at, for example, about 120°C. Generally, the tinted contact lenses are substantially uniformly tinted throughout the body of the lens. The contact lenses of the invention are furthermore bleach-resistant, and, due to a quantitative incorporation of the pigment into the lens matrix, show no leaching or migration of the pigment out of the lens. In addition, the contact lenses are optical clear and transparent and have transmission values %T which are equivalent to those of untinted lenses.

It can also be emphasised that the full-body tinted contact lenses of the invention can be produced in a very simple and efficient manner as compared with the prior art. This is the result of several factors. Firstly, the starting materials are inexpensive to obtain or prepare. Secondly, there is the advantage that the prepolymers are surprisingly stable, so that they can be subjected to a high degree of purification. Accordingly, since it is possible to use for the crosslinking a purified polymer, and furthermore since the pigment is entrapped quantitatively within the polymer matrix during the crosslinking and/or polymerization step, virtually no subsequent purification, such as, especially, the complicated extraction of pigment and/or unpolymerised constituents is required (e.g. to achieve ophthalmic compatibility or meet regulatory requirements). A further significant advantage of the present methods and compositions is that the pigment does not deactivate during the crosslinking and/or polymerization step. It has been unexpectedly found that pigments, particularly metal phthalocyanine pigments and equivalents thereof, are not subject to any substantial tinting deactivation during the application of ultraviolet radiation to form the solid contact lens. In contrast, quite a large number of dyes are subject to bleaching during the polymerization or molding step of the lens manufacturing process. Moreover, the crosslinking can be carried out in an aqueous solution, so that the subsequent exchange of solvents or the hydration step, respectively, is not required. Finally, the photopolymerisation takes place in a short time, so that the process for the production of the contact lenses of the invention can be made extraordinarily economical from that point of view also.

All the advantages mentioned above naturally apply not only to contact lenses but also to other moldings according to the invention. While visibility tinted ophthalmic lenses are the preferred products, the present invention may have utility in the fabrication of a wide variety of translucent or transparent polymeric products, including without limitation thereto, translucent automotive windshields or side glazing; films or membranes such as membranes for diffusion control, photostructurizable films for information storage, or photoresist materials (e.g., membranes or moldings for etch resist or screen printing resist); and plastic eyeglasses or spectacles. Ophthalmic lenses, as used herein, refers to contact lenses (hard or soft), intraocular lenses, eye bandages and artificial corneas. The present invention has particular utility with regard to the fabrication of soft, hydrophilic contact lenses which are full-body tinted so that the consumer can identify the lenses in a lens-retaining container.
The sum of the various advantageous aspects in the production of the moldings of the invention leads to the moldings of the invention being suitable especially as mass-produced articles, for example as contact lenses that are worn for a short period of time and are then replaced by new lenses.

In the following Examples amounts are amounts by weight, unless specified otherwise, and temperatures are given in degrees Celsius. The Examples are not intended to limit the invention in any way, for example to the scope of the examples.

### EXAMPLE 1 (Preparation of polymer precursor functionalizer)

220 grams of sodium hydroxide is dissolved in 300 grams water and 700 grams ice in a 3-liter reactor having a stirrer and cooling system. The sodium hydroxide solution is cooled to 10°C. 526 grams of aminoacetaldehyde dimethylacetal and 50 mg of 4-hydroxy-2,2,6,6-tetramethylpiperidin-1-oxide (a radical inhibitor) are added to the sodium hydroxide solution. 548.6 grams of methacrylic acid chloride are slowly added to the solution at 10°C over a period of 3.5 hours. The pH value drops slowly to 7.2 when the addition is complete, and amine can no longer be detected by gas chromatography. The mixture is extracted with 500 ml of petroleum ether, and in order to remove impurities, the aqueous phase is saturated with sodium chloride and extracted three times with 500 ml of tert-butyl methyl ether. The organic phase is dried with magnesium sulfate, filtered and concentrated using a rotary evaporator. The resulting 882.2 g. of yellowish oil are slowly stirred into 2000 ml of petroleum ether at -10°C by means of an Ultraurax. The product crystallizes, and is isolated by filtration and dried. 713.8 grams of methacrylamidoacetaldehyde dimethylacetal, having a melting point of 30-32°C are obtained. The product is 99.7% pure according to gas chromatography.

### EXAMPLE 2 (Preparation of crosslinkable polymer precursor)

300 grams of Mowiol 3-83 (polyvinyl alcohol from Hoechst) are placed in a 2-liter double-jacket reactor having a strirrer and thermometer. 800 grams of deionized water are added to the reactor, and the aqueous mixture is heated to 95°C with stirring. After about an hour, a clear solution of PVA is produced. The solution is cooled to 20°C.
27 g. of methacrylamidoacetaldehyde dimethyl acetal functionalizer (from Example 1), 440 g. of acetic acid, 100 g. of concentrated hydrochloric acid (37%) and 333 g. of deionized water are mixed to produce a 2000 g. reaction solution. The mixture is stirred for 20 hours at 20°C to produce a crosslinkable polyvinyl alcohol. The change in acetate content can be ascertained by titration with acetic acid.

### EXAMPLE 3 (Purification of crosslinkable polymer precursor)

The crosslinkable PVA solution from Example 2 is dialysed by means of ultrafiltration. The ultrafiltration is accomplished by using a 1-KD-Omega membrane produced by Filtron. Ultrafiltration is continued until a residue sodium chloride content of 0.004% is achieved. Concentration of the dialysed solution yields 942 grams of a 30 % crosslinable PVA solution with N-content of 0.672 % (by Kjeldahl determination), acetate content of 1.516 meg/g. (by hydrolysis), dynamic viscosity of 2000 mPas, double bonds of 0.480 meq/g. (by microhydrogenation), free hydroxyl groups of 17.74 meq/g (by reacetylation), molecular weights of Mw=26200 and Mn=12300 (by size exclusion chromatography in water).

### EXAMPLE 4 (Preparation of a pigment dispersion)

An aqueous dispersion is prepared by adding with stirring 0.97 g of purified copper phthalocyanine pigment (Unisphere Blue G-PI, average particle size 433 nm) to a solution of 1.55 g Moviol 3-83 and 3.97 ml of distilled water.

0.65 g of the pigment dispersion obtained above is diluted by adding with stirring 205.0 g of the crosslinkable PVA solution according to Example 3. The pigment contents of the resulting dispersion is 0.047 % by weight relative to the entire dispersion.

### EXAMPLE 5 (Preparation of a tinted prepolymerization mixture)

17.5 g of the diluted pigment dispersion according to Example 4 is added to 191.5 g of the purified solution of the polymer precursor according to Example 3. After the addition of about 0.2 grams of photoinitiator (Irgacure®2959) the resultant formulation is mixed for about one hour and is then filtered over a 0.45 mm filter. The pigment contents of the resulting tinted prepolymerization mixture is 39.6 ppm relative to the entire formulation.

### EXAMPLE 6: (Formation of tinted contact lens)

About 0.025 ml of the tinted prepolymerization mixture from Example 5 are dispensed into a female mold half of a double-sided contact lens mold. The male mold half is then releasably affixed to the female mold half. Ultraviolet radiation is applied at an intensity of about 2.5 mW/cm² for a period of about 14 seconds. The mold halves are separated and the lens is removed. The lens is uniformly tinted throughout the body and has a visible light transmission of about 96%.

## Claims

1. A process for the manufacture of a tinted ophthalmic molding comprising the steps of:
(a) providing a water soluble polymer precursor having crosslinkable or polymerizable groups which is a crosslinkable polyvinyl alcohol having a weight average molecular weight of at least 2000;
(b) providing an aqueous pigment dispersion comprising a phthalocyanine pigment and a physiologically acceptable, water soluble, polymeric dispersing agent selected from the group consisting of a polymer precursor according to (a), a polyacrylic acid and a non-crosslinkable polyvinyl alcohol;
(c) mixing the pigment dispersion with the polymer precursor to form a tinted prepolymerization mixture;
(d) dispensing the tinted prepolymerization mixture into a mold;
(e) applying radiation to the tinted prepolymerization mixture in the mold, thereby crosslinking or polymerizing the polymer precursor and entrapping the pigment within the polymeric network of the resultant ophthalmic molding, and
(f) opening the mold so that the ophthalmic molding can be removed from the mold.

2. The process according to claim 1, wherein the ophthalmic molding is a contact lens.

3. The process according to claim 1 or 2, wherein the water soluble polymer precursor is a polyvinyl alcohol having a weight-average molecular weight of at least 2000 that, based on the number of hydroxy groups of the polyvinyl alcohol, include from 0.5% to 80% of units of formula I: 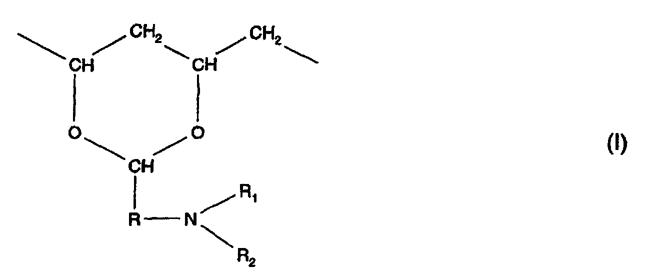 wherein:
R is alkylene having up to 8 carbon atoms, R₁ is hydrogen or alkyl having up to seven carbon atoms, and R₂ is an olefinically unsaturated, electron-attracting copolymerizable radical.

4. The process according to any one of claims 1 to 3, wherein the water soluble polymer precursor is a polyvinyl alcohol having a weight average molecular weight of at least 2000 that, based on the number of hydroxyl groups of the polyvinyl alcohol, includes from 0.5% to 80% of units of formula III: 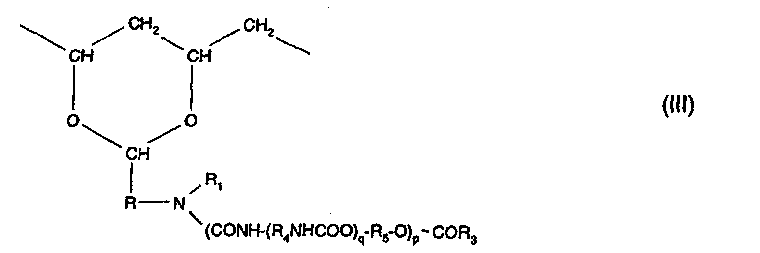 where R is alkylene having up to 8 carbon atoms, R₁ is hydrogen or alkyl having up to seven carbon atoms, p is zero or one, q is zero or one, R₃ is an olefinically unsaturated copolymerisable radical having from 2 to 8 carbon atoms, and R₄ and R₅ are each, independently of the other, alkylene having from 2 to 8 carbon atoms, arylene having from 6 to 12 carbon atoms, a saturated divalent cycloaliphatic group having from 7 to 14 carbon atoms or arylenealkylenearylene having from 13 to 16 carbon atoms.

5. The process according to claim 3 or 4, wherein R is alkylene having up to 6 carbon atoms, p is zero and R₃ is alkenyl having from 2 to 8 carbon atoms.

6. The process according to any one of claims 1 to 5, wherein the water soluble polymer precursor according to step (a) is provided in form of a 15 to 50 weight percent aqueous solution.

7. The process according to any one of claims 1 to 6, wherein the weight percentage of pigment, based on the total weight of polymer precursor and optional comonomers present in the prepolymerization mixture according to (c), is from 0.0001 to 0.05 %.

8. The process according to any one of claims 1 to 7, wherein a photoinitiator is added to the prepolymerization mixture according to step (c).

9. The process according to any one of claims 1 to 8, wherein the prepolymerization mixture according to step (c) is devoid of a comonomer.

10. The process according to any one of claims 1 to 9, wherein the crosslinking and/or polymerizing of the polymer precursor and the entrapping of the pigment according to step (e) occurs in a period of ≤ 5 minutes.

11. The process according to claim 1 for the manufacture of a tinted contact lens which comprises the following steps:
(a) providing an aqueous solution of a polyvinyl alcohol having polymerizable or crosslinkable groups;
(b) providing an aqueous dispersion comprising a copper phthalocyanine pigment;
(c) mixing the polyvinyl alcohol solution with the pigment dispersion to form a tinted prepolymerization mixture;
(d) introducing the tinted prepolymerization mixture into a mold;
(e) applying radiation to the tinted prepolymerization mixture in the mold, thereby crosslinking or polymerizing the polymer precursor and entrapping the pigment within the polymeric network of the resultant contact lens, and
(f) opening the mold so that the tinted contact lens can be removed from the mold.

12. The process according to claim 1 for the manufacture of a tinted contact lens which comprises the following steps:
(a) providing a 15 to 40 weight percent aqueous solution of a polyvinyl alcohol prepolymer having a weight-average molecular weight of at least 2000 that, based on the number of hydroxy groups of the polyvinyl alcohol, includes from 0.5% to 80% of units of formula I: 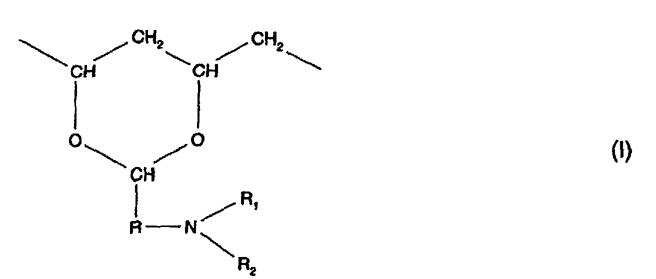 wherein R is alkylene having up to 8 carbon atoms, R₁ is hydrogen or alkyl having up to seven carbon atoms, and R₂ is an olefinically unsaturated, electron-attracting copolymerizable radical;
(b) providing an aqueous dispersion comprising a copper phthalocyanine pigment and a dispersing agent selected from the group consisting of a polyvinyl alcohol prepolymer according to (a), a polyacrylic acid and a non-crosslinkable polyvinyl alcohol;
(c) mixing the prepolymer solution according to (a) with the pigment dispersion according to (b) to form a tinted prepolymerization mixture;
(d) introducing the tinted prepolymerization mixture into a mold;
(e) applying radiation to the prepolymerization mixture in the mold in a time period of ≤ 5 minutes, thereby crosslinking or polymerizing the polymer precursor and entrapping the pigment within the polymeric network of the resultant contact lens, and
(f) opening the mold so that the tinted contact lens can be removed from the mold.

13. The process according to claim 1 for the manufacture of a tinted contact lens which is suitable to be inserted into the human eye without extraction, comprising the following steps:
(a) providing a 20 to 40 weight percent aqueous solution of a polyvinyl alcohol prepolymer having a weight-average molecular weight of at least 2000 that, based on the number of hydroxy groups of the polyvinyl alcohol, includes from 0.5% to 80% of units of formula III: 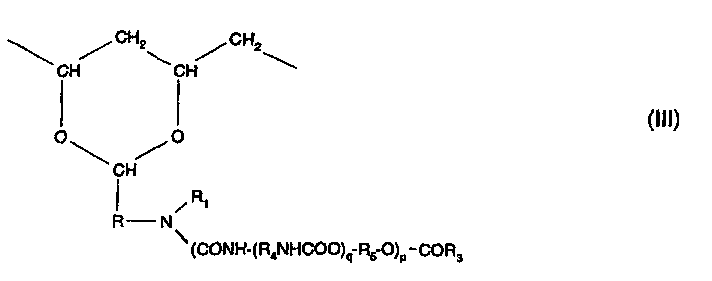 where R is alkylene having up to 6 carbon atoms, R₁ is hydrogen or alkyl having up to 4 carbon atoms, p is zero, and R₃ is alkenyl having from 2 to 8 carbon atoms;
(b) providing an aqueous dispersion comprising a copper phthalocyanine pigment and a dispersing agent selected from the group consisting of a polyvinyl alcohol prepolymer according to (a) and a non-crosslinkable polyvinyl alcohol;
(c) mixing the prepolymer solution according to (a) with the pigment dispersion according to (b) and an additional photoinitiator to form a tinted prepolymerization mixture containing 0.0001 to 0.05 weight percent phthalocyanine pigment, based on the total weight of polymer precursor;
(d) introducing the tinted prepolymerization mixture into a mold;
(e) applying radiation to the tinted prepolymerization mixture in the mold in a time period of ≤ 1 minute, thereby crosslinking or polymerizing the polymer precursor and entrapping the pigment within the polymeric network of the resultant contact lens, and
(f) opening the mold so that the tinted contact lens can be removed from the mold.

14. An ophthalmic molding, which is formed by a process according to any one of claims 1 to 13.

## Patentansprüche

1. Verfahren zur Herstellung eines gefärbten ophthalmischen Formteils, umfassend die Schritte:
(a) Bereitstellen eines wasserlöslichen Polymerpräkursors, der vernetzbare oder polymerisierbare Gruppen aufweist und ein vernetzbarer Polyvinylalkohol mit einem gewichtsmittleren Molekulargewicht von zumindest 2000 ist;
(b) Bereitstellen einer wässerigen Pigmentdispersion, umfassend ein Phthalocyaninpigment und ein physiologisch verträgliches, wasserlösliches polymeres Dispergiermittel, das aus der Gruppe ausgewählt ist, die aus einem Polymerpräkursor gemäß (a), einer Polyacrylsäure und einem nicht-vernetzbaren Polyvinylalkohol besteht;
(c) Mischen der Pigmentdispersion mit dem Polymerpräkursor, um ein gefärbtes Vorpolymerisationsgemisch zu bilden;
(d) Füllen des gefärbten Vorpolymerisationsgemisches in eine Form;
(e) Anwenden von Strahlung auf das gefärbte Vorpolymerisationsgemisch in der Form, wodurch der Polymerpräkursor vernetzt oder polymerisiert und das Pigment in das polymere Netzwerk des resultierenden ophthalmischen Formteils eingeschlossen wird, und
(f) Öffnen der Form, so daß das ophthalmische Formteil aus der Form entfernt werden kann.

2. Verfahren nach Anspruch 1, wobei das ophthalmische Formteil eine Kontaktlinse ist.

3. Verfahren nach Anspruch 1 oder 2, wobei der wasserlösliche Polymerpräkursor ein Polyvinylalkohol mit einem gewichtsmittleren Molekulargewicht von zumindest 2000 ist, der, basierend auf der Anzahl der Hydroxygruppen des Polyvinylalkohols, 0,5 % bis 80 % von Einheiten der Formel I umfaßt: 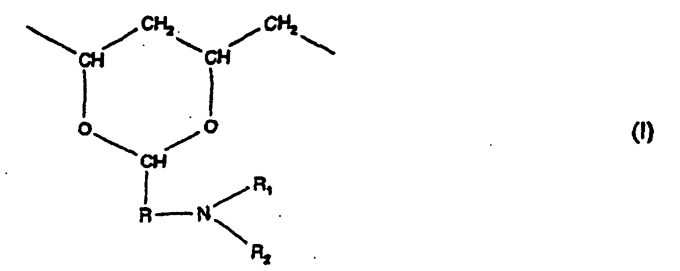 worin:
R Alkylen mit bis zu 8 Kohlenstoffatomen darstellt, R₁ Wasserstoff oder Alkyl mit bis zu 7 Kohlenstoffatomen darstellt und R₂ einen olefinisch ungesättigten, elektronenanziehenden copolymerisierbaren Rest darstellt.

4. Verfahren nach einem der Ansprüche 1 bis 3, wobei der wasserlösliche Polymerpräkursor ein Polyvinylalkohol mit einem gewichtsmittleren Molekulargewicht von zumindest 2000 ist, der, basierend auf der Anzahl der Hydroxylgruppen des Polyvinylalkohols, 0,5 % bis 80 % von Einheiten der Formel III umfaßt: 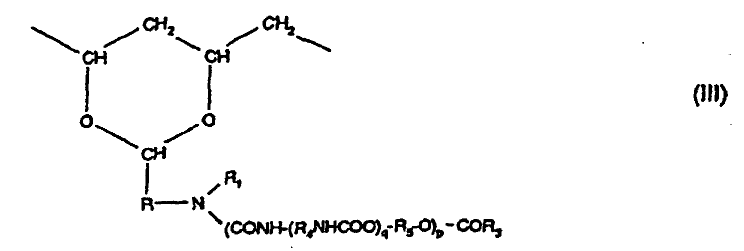 worin R Alkylen mit bis zu 8 Kohlenstoffatomen darstellt, R₁ Wasserstoff oder Alkyl mit bis zu 7 Kohlenstoffatomen darstellt, p 0 oder 1 ist, q 0 oder 1 ist, R₃ einen olefinisch ungesättigten copolymerisierbaren Rest mit 2 bis 8 Kohlenstoffatomen darstellt, und R₄ und R₅ jeweils, unabhängig von dem anderen, Alkylen mit 2 bis 8 Kohlenstoffatomen, Arylen mit 6 bis 12 Kohlenstoffatomen, eine gesättigte zweiwertige cycloaliphatische Gruppe mit 7 bis 14 Kohlenstoffatomen oder Arylenalkylenarylen mit 13 bis 16 Kohlenstoffatomen darstellen.

5. Verfahren nach Anspruch 3 oder 4, wobei R Alkylen mit bis zu 6 Kohlenstoffatomen darstellt, p 0 ist, und R₃ Alkenyl mit 2 bis 8 Kohlenstoffatomen darstellt.

6. Verfahren nach einem der Ansprüche 1 bis 5, wobei der wasserlösliche Polymerpräkursor gemäß Schritt (a) in Form einer 15- bis 50-gewichtsprozentigen wässerigen Lösung bereitgestellt wird.

7. Verfahren nach einem der Ansprüche 1 bis 6, wobei der Gewichtsprozentsatz des Pigments, basierend auf dem Gesamtgewicht des Polymerpräkursors und gegebenenfalls von Comonomeren, die in dem Vorpolymerisationsgemisch gemäß (c) vorliegen, 0,0001 bis 0,05 % beträgt.

8. Verfahren nach einem der Ansprüche 1 bis 7, wobei ein Photoinitiator zu dem Vorpolymerisationsgemisch gemäß Schritt (c) zugegeben wird.

9. Verfahren nach einem der Ansprüche 1 bis 8, wobei das Vorpolymerisationsgemisch gemäß Schritt (c) frei von einem Comonomer ist.

10. Verfahren nach einem der Ansprüche 1 bis 9, wobei die Vernetzung und/oder Polymerisation des Polymerpräkursors und das Einschließen des Pigments gemäß Schritt (e) in einem Zeitraum von ≤ 5 Minuten eintritt.

11. Verfahren nach Anspruch 1 zur Herstellung einer gefärbten Kontaktlinse, das die folgenden Schritte umfaßt:
(a) Bereitstellen einer wässerigen Lösung eines Polyvinylalkohols, der polymerisierbare oder vernetzbare Gruppen aufweist;
(b) Bereitstellen einer wässerigen Dispersion, umfassend ein Kupferphthalo-cyaninpigment;
(c) Mischen der Polyvinylalkohollösung mit der Pigmentdispersion, um ein gefärbtes Vorpolymerisationsgemisch zu bilden;
(d) Einbringen des gefärbten Vorpolymerisationsgemisches in eine Form;
(e) Anwenden von Strahlung auf das gefärbte Vorpolymerisationsgemisch in der Form, wodurch der Polymerpräkursor vernetzt oder polymerisiert und das Pigment in das polymere Netzwerk der resultierenden Kontaktlinse eingeschlossen wird, und
(f) Öffnen der Form, so daß die gefärbte Kontaktlinse aus der Form entfernt werden kann.

12. Verfahren nach Anspruch 1 zur Herstellung einer gefärbten Kontaktlinse, das die folgenden Schritte umfaßt:
(a) Bereitstellen einer 15- bis 40-gewichtsprozentigen wässerigen Lösung eines Polyvinylalkohol-Vorpolymers mit einem gewichtsmittleren Molekulargewicht von zumindest 2000, das, basierend auf der Anzahl der Hydroxygruppen des Polyvinylalkohols, 0,5 % bis 80 % von Einheiten der Formel I umfaßt: 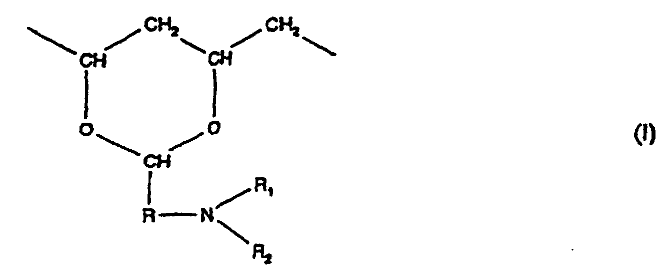 worin R Alkylen mit bis zu 8 Kohlenstoffatomen darstellt, R₁ Wasserstoff oder Alkyl mit bis zu 7 Kohlenstoffatomen darstellt und R₂ einen olefinisch ungesättigten, elektronenanziehenden copolymerisierbaren Rest darstellt;
(b) Bereitstellen einer wässerigen Dispersion, umfassend ein Kupferphthalocyaninpigment und ein Dispergiermittel, das aus der Gruppe ausgewählt ist, die aus einem Polyvinylalkohol-Vorpolymer gemäß (a), einer Polyacrylsäure und einem nicht-vernetzbaren Polyvinylalkohol besteht;
(c) Mischen der Vorpolymerlösung gemäß (a) mit der Pigmentdispersion gemäß (b), um ein gefärbtes Vorpolymerisationsgemisch zu bilden;
(d) Einbringen des gefärbten Vorpolymerisationsgemisches in eine Form;
(e) Anwenden von Strahlung auf das Vorpolymerisationsgemisch in der Form in einem Zeitraum von ≤ 5 Minuten, wodurch der Polymerpräkursor vernetzt oder polymerisiert und das Pigment in das polymere Netzwerk der resultierenden Kontaktlinse eingeschlossen wird, und
(f) Öffnen der Form, so daß die gefärbte Kontaktlinse aus der Form entfernt werden kann.

13. Verfahren nach Anspruch 1 zur Herstellung einer gefärbten Kontaktlinse, die dazu geeignet ist, in das menschliche Auge eingesetzt zu werden, ohne Extraktion, umfassend die folgenden Schritte:
(a) Bereitstellen einer 20- bis 40-gewichtsprozentigen wässerigen Lösung eines Polyvinylalkohol-Vorpolymers mit einem gewichtsmittleren Molekulargewicht von zumindest 2000, das, basierend auf der Anzahl der Hydroxygruppen des Polyvinylalkohols, 0,5 % bis 80 % von Einheiten der Formel III umfaßt: 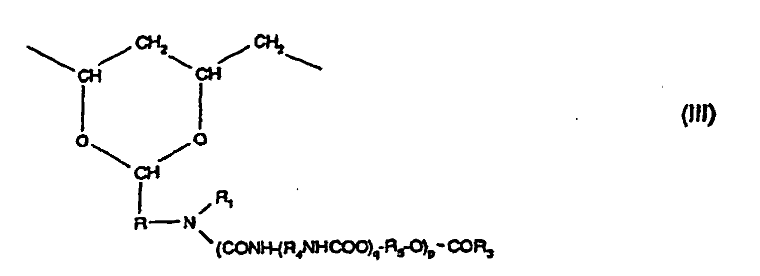 worin R Alkylen mit bis zu 6 Kohlenstoffatomen darstellt, R₁ Wasserstoff oder Alkyl mit bis zu 4 Kohlenstoffatomen darstellt, p 0 ist und R₃ ein Alkenyl mit 2 bis 8 Kohlenstoffatomen darstellt;
(b) Bereitstellen einer wässerigen Dispersion, umfassend ein Kupferphthalocyaninpigment und ein Dispergiermittel, das aus der Gruppe ausgewählt ist, die aus einem Polyvinylalkohol-Vorpolymer gemäß (a) und einem nicht-vernetzbaren Polyvinylalkohol besteht;
(c) Mischen der Vorpolymerlösung gemäß (a) mit der Pigmentdispersion gemäß (b) und einem zusätzlichen Photoinitiator, um ein gefärbtes Vorpolymerisationsgemisch zu bilden, das 0,0001 bis 0,05 Gew.-% Phthalocyaninpigment, basierend auf dem Gesamtgewicht des Polymerpräkursors, enthält;
(d) Einbringen des gefärbten Vorpolymerisationsgemisches in eine Form;
(e) Anwenden von Strahlung auf das gefärbte Vorpolymerisationsgemisch in der Form in einem Zeitraum von ≤ 1 Minute, wodurch der Polymerpräkursor vernetzt oder polymerisiert und das Pigments in das polymere Netzwerk der resultierenden Kontaktlinse eingeschlossen wird, und
(f) Öffnen der Form, so daß die gefärbte Kontaktlinse aus der Form entfernt werden kann.

14. Ophthalmisches Formteil, das durch ein Verfahren nach einem der Ansprüche 1 bis 13 gebildet ist.

## Revendications

1. Procédé de fabrication d'un moulage ophtalmique teinté comprenant les étapes consistant à :
(a) fournir un précurseur polymère hydrosoluble présentant des groupes réticulables ou polymérisables, qui est un alcool polyvinylique réticulable ayant un poids moléculaire moyen en poids d'au moins 2000 ;
(b) fournir une dispersion aqueuse de pigment contenant un pigment de phtalocyanine et un agent dispersant polymère, hydrosoluble, physiologiquement acceptable, choisi dans le groupe constitué par un précurseur polymère suivant l'étape (a), un acide polyacrylique et un alcool polyvinylique non réticulable ;
(c) mélanger la dispersion de pigment avec le précurseur polymère pour former un mélange de prépolymérisation teinté ;
(d) verser le mélange de prépolymérisation teinté dans un moule ;
(e) appliquer un rayonnement au mélange de prépolymérisation teinté dans le moule, ce qui permet de réticuler ou polymériser le précurseur polymère et de piéger le pigment dans le réseau polymère du moulage ophtalmique résultant ; et
(f) ouvrir le moule de telle sorte que le moulage ophtalmique puisse être extrait du moule.

2. Procédé selon la revendication 1, dans lequel le moulage ophtalmique est une lentille de contact.

3. Procédé selon la revendication 1 ou 2, dans lequel le précurseur polymère hydrosoluble est un alcool polyvinylique ayant un poids moléculaire moyen en poids d'au moins 2000 qui, sur la base du nombre de groupes hydroxyle de l'alcool polyvinylique, contient 0,5 % à 80 % de motifs de formule I : 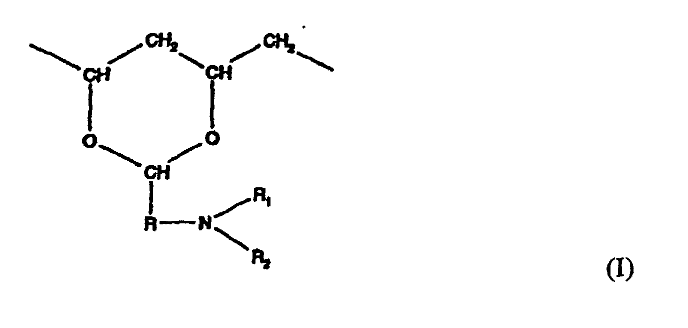 dans laquelle :
R est un groupe alkylène ayant jusqu'à 8 atomes de carbone, R₁ représente l'hydrogène ou un groupe alkyle ayant jusqu'à sept atomes de carbone, et R₂ est un radical copolymérisable attracteur d'électrons à insaturation oléfinique.

4. Procédé selon l'une quelconque des revendications 1 à 3, dans lequel le précurseur polymère hydrosoluble est un alcool polyvinylique ayant un poids moléculaire moyen en poids d'au moins 2000 qui, sur la base du nombre de groupes hydroxyle de l'alcool polyvinylique, contient 0,5 % à 80 % de motifs de formule III: 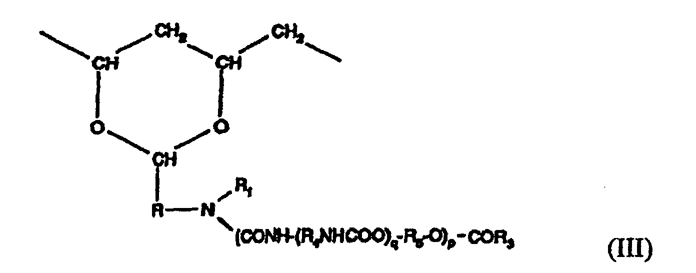 dans laquelle R est un groupe alkylène ayant jusqu'à 8 atomes de carbone, R₁ représente l'hydrogène ou un groupe alkyle ayant jusqu'à sept atomes de carbone, p vaut zéro ou un, q vaut zéro ou un, R₃ est un radical copolymérisable à insaturation oléfinique ayant 2 à 8 atomes de carbone, et R₄ et R₅ représentent, chacun indépendamment l'un de l'autre, un groupe alkylène ayant 2 à 8 atomes de carbone, un groupe arylène ayant 6 à 12 atomes de carbone, un groupe cycloaliphatique divalent saturé ayant 7 à 14 atomes de carbone ou arylènealkylènearylène ayant 13 à 16 atomes de carbone.

5. Procédé selon la revendication 3 ou 4, dans lequel R est un groupe alkylène ayant jusqu'à 6 atomes de carbone, p vaut zéro et R₃ est un groupe alcényle ayant 2 à 8 atomes de carbone.

6. Procédé selon l'une quelconque des revendications 1 à 5, dans lequel le précurseur polymère hydrosoluble selon l'étape (a) est fourni sous forme d'une solution aqueuse à 15 à 50 pour cent en poids.

7. Procédé selon l'une quelconque des revendications 1 à 6, dans lequel le pourcentage pondéral de pigment, sur la base du poids total du précurseur polymère et des comonomères facultatifs présents dans le mélange de prépolymérisation suivant l'étape (c) est de 0,0001 à 0,05 %.

8. Procédé selon l'une quelconque des revendications 1 à 7, dans lequel on ajoute un photoinitiateur au mélange de prépolymérisation suivant l'étape (c).

9. Procédé selon l'une quelconque des revendications 1 à 8, dans lequel le mélange de prépolymérisation suivant l'étape (c) est dépourvu de comonomère.

10. Procédé selon l'une quelconque des revendications 1 à 9, dans lequel la réticulation et/ou la polymérisation du précurseur polymère et le piégeage du pigment suivant l'étape (c) ont lieu en un temps inférieur ou égal à 5 minutes.

11. Procédé selon la revendication 1 pour la fabrication d'une lentille de contact teintée, qui comprend les étapes suivantes :
(a) fournir une solution aqueuse d'un alcool polyvinylique ayant des groupes polymérisables ou réticulables ;
(b) fournir une dispersion aqueuse contenant un pigment de phtalocyanine de cuivre ;
(c) mélanger la solution d'alcool polyvinylique avec la dispersion de pigment pour former un mélange de prépolymérisation teinté ;
(d) introduire le mélange de prépolymérisation teinté dans un moule ;
(e) appliquer un rayonnement au mélange de prépolymérisation teinté dans le moule, ce qui permet de réticuler ou de polymériser le précurseur polymère et de piéger le pigment dans le réseau polymère de la lentille de contact résultante, et
(f) ouvrir le moule de telle sorte que la lentille de contact teintée puisse être extraite du moule.

12. Procédé selon la revendication 1 pour la fabrication d'une lentille de contact teintée, comprenant les étapes suivantes :
(a) fournir une solution aqueuse à 15 à 40 pour cent en poids d'un prépolymère d'alcool polyvinylique ayant un poids moléculaire moyen en poids d'au moins 2000 qui, sur la base du nombre de groupes hydroxyle de l'alcool polyvinylique, contient 0,5 % à 80 % de motifs de formule I : 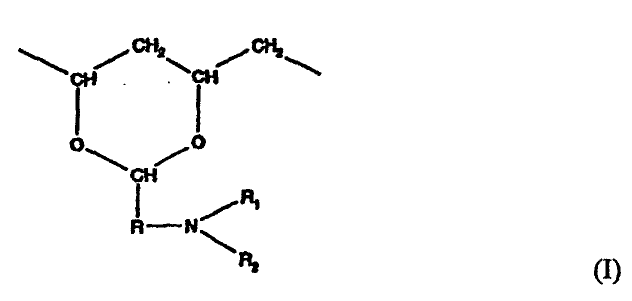 dans laquelle R est un groupe alkylène ayant jusqu'à 8 atomes de carbone, R₁ représente l'hydrogène ou un groupe alkyle ayant jusqu'à sept atomes de carbone, et R₂ est un radical copolymérisable attracteur d'électrons à insaturation oléfinique ;
(b) fournir une dispersion aqueuse contenant un pigment de phtalocyanine de cuivre et un agent dispersant choisi dans le groupe constitué par un prépolymère d'alcool polyvinylique suivant l'étape (a), un acide polyacrylique et un alcool polyvinylique non réticulable ;
(c) mélanger la solution de prépolymère suivant l'étape (a) avec la dispersion de pigment suivant l'étape (b) pour former un mélange de prépolymérisation teinté ;
(d) introduire le mélange de prépolymérisation teinté dans un moule ;
(e) appliques un rayonnement au mélange de prépolymérisation dans le moule pendant une période de temps inférieure ou égale à 5 minutes, ce qui permet de réticuler ou de polymériser le précurseur polymère et de piéger le pigment dans le réseau polymère de la lentille de contact résultante, et
(f) ouvrir le moule de telle sorte que la lentille de contact teintée puisse être extraite du moule.

13. Procédé selon la revendication 1 pour la fabrication d'une lentille de contact teintée qui convient pour être insérée dans l'oeil humain sans extraction, comprenant les étapes suivantes :
(a) fournir une solution aqueuse à 20 à 40 pour cent en poids d'un prépolymère d'alcool polyvinylique ayant un poids moléculaire moyen en poids d'au moins 2000 qui, sur la base du nombre de groupes hydroxyle de l'alcool polyvinylique, contient 0,5 % à 80 % de motifs de formule III: 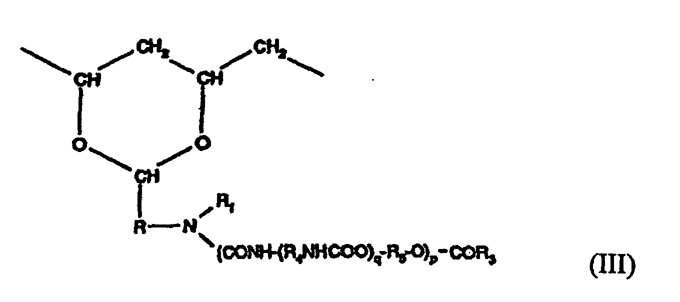 dans laquelle R est un groupe alkylène ayant jusqu'à 6 atomes de carbone, R₁ représente l'hydrogène ou un groupe alkyle ayant jusqu'à 4 atomes de carbone, p vaut zéro et R₃ est un groupe alcényle ayant 2 à 8 atomes de carbone ;
(b) fournir une dispersion aqueuse contenant un pigment de phtalocyanine de cuivre et un agent dispersant choisi dans le groupe constitué par un prépolymère d'alcool polyvinylique suivant l'étape (a) et un alcool polyvinylique non réticulable ;
(c) mélanger la solution de prépolymère suivant l'étape (a) avec la dispersion de pigment suivant l'étape (b) et un photoinitiateur additionnel pour former un mélange de prépolymérisation teinté contenant 0,0001 à 0,05 pour cent en poids de pigment de phtalocyanine, sur la base du poids total du précurseur polymère ;
(d) introduire le mélange de prépolymérisation teinté dans un moule ;
(e) appliquer un rayonnement au mélange de prépolymérisation teinté dans le moule pendant une période de temps inférieure ou égale à 1 minute, ce qui permet de réticuler ou de polymériser le précurseur polymère et de piéger le pigment dans le réseau polymère de la lentille de contact résultante, et
(f) ouvrir le moule de telle sorte que la lentille de contact teintée puisse être extraite du moule.

14. Moulage ophtalmique, qui est formé par un procédé selon l'une quelconque des revendications 1 à 13.
